# EUROPEAN PATENT SPECIFICATION

(11) **EP 1 459 281 B1**
(45) Date of publication and mention of the grant of the patent: **14.06.2006**
(21) Application number: 02781571.1
(22) Date of filing: 20.11.2002
(51) Int. Cl.: G09F 9/37, G02B 26/02, G09G 3/34

(54) **DISPLAY PANEL COMPRISING A LIGHT GUIDE**
ANZEIGETAFEL MIT EINEM LICHTLEITER
ECRAN D'AFFICHAGE COMPRENANT UN GUIDE DE LUMIERE

(30) Priority: 10.12.2001 EP 01204745
(43) Date of publication of application: 22.09.2004
(73) Proprietor: Koninklijke Philips Electronics N.V., 5621 BA Eindhoven (NL)
(72) Inventor: MARRA, Johannes, NL-5656 AA Eindhoven (NL); COBBEN, Pierre, L., H., M., NL-5656 AA Eindhoven (NL); BAKEN, Joanna, M., E., NL-5656 AA Eindhoven (NL); VAN GORKOM, Gerardus, G., P., NL-5656 AA Eindhoven (NL); DUINE, Peter, A., NL-5656 AA Eindhoven (NL)
(74) Representative: Rolfes, Johannes Gerardus Albertus
(86) International application number: PCT/IB2002/004885
(87) International publication number: WO 2003/050788

(56) References cited:
- EP-A- 0 675 477
- WO-A-01/37627
- WO-A-99/28890
- US-A- 5 771 321
- US-A1- 2001 043 171

## Description

The invention relates to a display panel comprising a light guide plate, a second plate facing the light guide plate, a movable element between the light guide plate and the second plate, for locally coupling light out of the light guide plate, the light guide plate having a contact surface facing the movable element for contacting the movable element, the second plate having a contact surface facing the movable element for contacting the movable element, the movable element having a first contact surface facing the light guide plate for contacting the light guide plate and a second contact surface facing the second plate for contacting the second plate, means for reducing sticking of the movable element to the plates comprising a roughness R1 at the contact surface of the light guide plate and a roughness R2 at the first contact surface of the movable element, at least one of the roughnesses R1 and R2 being larger than 5 nm and both the roughnesses R1 and R2 being smaller than 100 nm, and electrodes to locally bring the contact surfaces of the movable element into contact with respectively the contact surface of the light guide plate and the contact surface of the second plate.

An embodiment of the display panel of the type mentioned in the opening paragraph is known from WO 99/28890.

The known display panel comprises a light guide plate of a fluorescent material, in which display panel, in operation, light is generated and trapped so that this first plate forms a light guide, a second plate and, between said two plates, a movable element. By applying suitable voltages to the electrodes on the light guide plate, the second plate and the movable element, the movable element is locally brought into contact with the light guide plate or the second plate. The electrode on the movable element is also referred to as common electrode. At locations where the movable element is in contact with the light guide plate, light is coupled out of the light guide plate during operation and scattered out of the movable element. Locations where light can be coupled out of the light guide plate are known as picture elements. By regulating whether or not light is coupled out at picture elements an image is represented.

Roughnesses R1 and R2 are present at the contact surface of the light guide plate facing the movable element and at the contact surface of the movable element facing the light guide plate to reduce sticking of the movable element to the light guide plate by reducing adhesive Van der Waals' forces. Roughness is defined as the distance range within which the surface profile is confined, as measured with e.g. an atomic force microscope. It is known that, if at least one of the roughnesses R1 and R2 is larger than 5 nm, the Van der Waals' forces are reduced substantially. On the other hand, if one of the roughnesses R1 and R2 is larger than 100 nm, then the optical contact between the movable element and the light guide plate is reduced, such that the coupling of light out of the light guide plate is severely diminished. Furthermore, anti-adhesion layers are present in between the movable element and the light guide plate as well as in between the movable element and the second plate. These layers reduce sticking of the movable element to the plates by reducing the magnitude of the chemical adhesive forces.

Electrodes on the surfaces of both plates facing the movable element are separated from the common electrode on the movable element by an insulating layer having a thickness of about one micrometer. These insulating layers are present on the electrodes on the light guide plate and the second plate to prevent direct electrical contact with the common electrode on the movable element. The insulating layer represents the contact surface of the plate. Therefore, the contact surface of a member facing another member denotes the free surface of the member, whether or not covered with layers, which is capable of making direct contact with the other member.

A drawback of the known display panel is that it requires relatively much energy to locally bring about contact between the light guide plate and the movable element by applying voltages to the electrodes. Therefore, in operation, the known panel requires relatively much energy.

It is an object of the invention to provide a display panel of the kind mentioned in the opening paragraph, which requires relatively little energy to be operated.

This object is achieved in that the means for reducing sticking further comprise a roughness R3 at the contact surface of the second plate and a roughness R4 at the second contact surface of the movable element, and both the roughnesses R1 and R2 are smaller than at least one of the roughnesses R3 and R4.

The inventors have recognized that the energy to locally bring about contact between the light guide plate and the movable element by applying voltages to the electrodes is smaller if a roughness R3 is present at the contact surface of the second plate facing the movable element and a roughness R4 is present at the contact surface of the movable element facing the second plate. If at least one of the roughnesses R3 and R4 is larger than 5 nm, the Van der Waals' forces between the second plate and the movable element are reduced substantially, resulting in a display panel requiring relatively little energy to locally bring about contact between the light guide plate and the movable element. Taking into account only these Van der Waals' forces, there is no reason for the roughnesses R3 and R4 to be over 5 nm. However, the inventors have further recognized that the roughnesses R3 and R4 influence, at a given voltage difference between the second plate and the movable element, the attractive electrical force between the second plate and the movable element. This attractive electrical force is inversely proportional to the square of the distance between the electrode on the second plate and the common electrode on the movable element. For the second plate and the movable element, which stick together tightly via intimate surface contact, this attractive electrical force is relatively large. To pull them apart, this relatively large attractive electrical force has to be overcome, as it is very difficult in practice to delete this attractive electrical force by removing the voltage difference. If the distance between the second plate and the movable element is larger, the movable element and the second plate do not stick together tightly via intimate surface contact, i.e. the contact surfaces mostly touch each other at the tips of protrusions protecting from either one of the surfaces or from both surfaces, and it is easier to pull them apart. It is clear that if the movable element sticks tightly to the second plate, the voltage difference between the electrodes on the movable element and the light guide plate that is necessary to interrupt this contact is relatively large. By virtue of the roughness R3 at the contact surface of the second plate facing the movable element and the roughness R4 at the contact surface of the movable element facing the second plate, a smaller attractive electrical force between the movable element and the second plate, if the movable element is in contact with the second plate, has to be overcome in order to interrupt this contact. This attractive electrical force can still be non-negligible if one of the roughnesses R3 and R4 is smaller than 5 nm and the other roughness is equal to 5 nm. A roughness larger than 5 nm causes the energy necessary to interrupt this contact to be smaller. In fact, the maximum value for the roughnesses R3 and R4 is limited by the space in between the light guide plate and the second plate, which space is reduced by the thickness of the movable element.

A relatively small attractive electrical force between the movable element and the second plate, induced by voltages applied to the electrodes on the movable element and the second plate if the movable element is in contact with the second plate, causes the required electrical force, induced by voltages applied to the electrodes on the movable element and the light guide plate, necessary to interrupt this contact to be relatively small, relatively little subject to variations and well-controllable.

According to the present the invention, at least one of the roughnesses R3 and R4 is larger than 100 nm and both roughnesses R3 and R4 are smaller than 1000 nm.

The electrodes on the surface of both plates facing the movable element are covered by an insulating layer having a thickness of about one micrometer. This insulating layer represents the contact surface of the plate. For a roughness below 100 nm, the electrical forces to be overcome are hardly reduced as the roughness is small compared to the thickness of the insulating layer. For larger values of the roughness, the electrical force to be overcome is reduced significantly. If the roughness is larger than 1000 nm, the roughness is non-negligible compared to the distance of about four micrometers between both plates, which distance is reduced by the thickness of the movable element, which is generally in the range between one and two micrometers.

In an embodiment of the display panel in accordance with the invention, the roughness R2 is larger than the roughness R1 and the roughness R4 is larger than the roughness R3. Both the light guide plate and the second plate have smooth contact surfaces, which is easier to realize in a production process. Furthermore, the light guide properties of the light guide plate improve with increasing smoothness of its surface.

In a modification of the last embodiment, the roughness R2 is in the range between 5 and 100 nm and the roughness R4 is in the range between 100 and 1000 nm. These are the preferred ranges for the roughnesses now present on the movable element. Furthermore, as the roughness R4 ranges between 100 and 1000 nm, the isotropicity of the emitted light at the picture element is large.

It is favorable if at least one of the roughnesses R2 and R4 is brought about by inorganic protrusions from the movable element. The inorganic protrusions are not readily subject to elastic and/or plastic deformations when the movable element is in contact with one of the plates, thus preventing elastic and/or plastic deformation-induced Van der Waals' adhesion. It is especially favorable if the movable element, having a volume, comprises a matrix layer selected from the group consisting of glassy amorphous and crystalline polymeric layers, with 1 to 25 percent of the volume being occupied by TiO2 particles having a diameter between 200 and 400 nm, and an indium tin oxide layer. The matrix layer exists either in a glassy amorphous state or in a crystalline state or in a mixed glassy amorphous/crystalline state such as to give the polymeric material a stiffness similar to that of a crystalline organic material. These matrix layers are for example parylene, polymethylmethacrylate, some fluoropolymers and polyimide layers. These materials do not readily suffer from plastic deformations and/or creep. The movable element may have a surface roughness on the surface facing the light guide plate in the range from 30 to 50 nm, as formed by TiO2 particles slightly protruding from the movable element and a surface roughness of the surface facing the second plate in the range from 100 to 1000 nm. The thickness of the movable element may be for example in between one and two micrometers. The conducting indium tin oxide (ITO) layer represents the common electrode across the entire surface of the movable element in order to apply a voltage to the movable element. The ITO layer is transparent to prevent absorption of light emitted at the contact surface between the light guide plate and the movable element. A preferred thickness of the ITO layer is about 30 to 50 nm. Light that is extracted from the light guide by the movable element is scattered by scattering centers, such as TiO2, and the surface roughnesses on both sides of the movable element. Particles smaller than 0.05 micrometer do not scatter the light very efficiently. Particles larger than one micrometer are too large to be properly confined within the movable element.

In an embodiment of the display panel in accordance with the invention, the display panel is part of a display device. The display device further comprises selection means arranged to apply voltages to the electrodes dependent on the image information to be displayed.

These and other aspects of the invention will be further elucidated and described with reference to the drawings, in which:
Fig. 1 shows schematically a cross-sectional view of the display panel,
Fig. 2 shows schematically a part of the display panel,
Fig. 3 shows schematically details of a part of the display panel,
Fig. 4 shows schematically the movable element, and
Fig. 5 shows schematically the display device.

The figures are schematic and not drawn to scale and in all the figures identical reference numerals refer to corresponding parts.

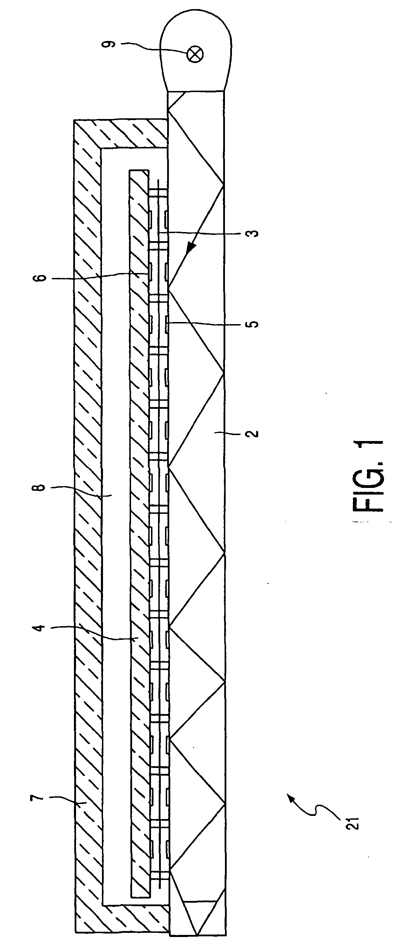

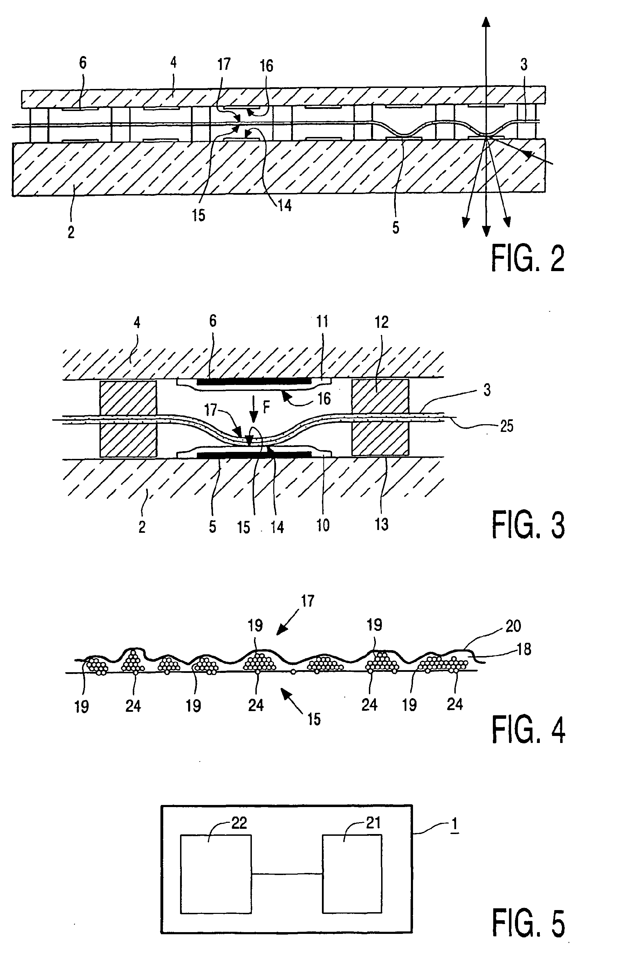

In Fig. 1, the display panel 21 comprises a light guide plate 2, a movable element 3 and a second plate 4. Electrodes 5 and 6 are arranged, respectively, on the sides of the light guide plate 2 and the second plate 4 facing the movable element 3. The display panel 21 comprises a covering element 7 connected to the light guide plate 2, thus forming a space 8. The display panel 21 further comprises a light source 9. Light generated by the light source 9 is coupled into the light guide plate 2. The light travels inside the light guide plate 2 and, due to internal reflection, cannot escape from the light guide plate 2 unless the situation as shown in Fig. 2 occurs. Fig. 2 shows the movable element 3 locally lying against the light guide plate 2. In this state, part of the light enters the movable element 3. The movable element 3 scatters the light, so that it leaves the display panel 21. The light can issue at both sides or at one side. Preferably, in order to cause the light to exit the movable element 3, the movable element 3 comprises a layer of a material, for instance a polymer, also called a matrix layer, in which scattering centers are present. Such scattering centers may be formed by particles of a material other than the material of the matrix layer or by bubbles in the matrix layer. Light entering the movable element 3 is scattered by scattering centers. In Fig. 2, this is indicated by means of straight arrows. Furthermore, in Fig. 2 also the contact surface 14 of the light guide plate 2 facing the movable element 3, the contact surface 15 of the movable element 3 facing the light guide plate 2, the contact surface 16 of the second plate 4 facing the movable element 3, and the contact surface 17 of the movable element 3 facing the second plate 4 are indicated.

In Fig. 3, the movable element 3 is positioned between the light guide plate 2 and the second plate 4 by means of spacers 12 and 13. A common electrode 25 is part of the movable element 3. The common electrode 25 can be present on the side of the movable element 3 facing the light guide plate 2, on the side of the movable element 3 facing the second plate 4 or may even be part of the bulk of the movable element 3. Electrodes 5 and 6 are covered by insulating layers 10 and 11 in order to preclude direct electric contact between the common electrode 25 on the movable element 3 and the electrodes 5 and 6. The insulating layer 10 on the light guide plate 2 is not necessary if the common electrode 25 is on the side of the movable element 3 facing the second plate 4. By applying suitable voltages to the electrodes 5, 6 and the common electrode 25 on the movable element 3, an electric force F is generated which presses the movable element 3 against the electrode 5 on the light guide plate 2. The electrode 5 is transparent and may consist of ITO. The contact between the movable element 3 and the light guide plate 2 causes light to leave the light guide plate 2 and enter the movable element 3 at the location of contact. In the movable element 3, the light is scattered and leaves the display panel 21 via the transparent electrode 5 and the light guide plate 2. The roughness R1 at the contact surface 14 of the light guide plate 2 facing the movable element 3 and the roughness R2 at the contact surface 15 of the movable element 3 facing the light guide plate 2 are present to reduce sticking of the movable element 3 to the light guide plate 2. At least one of the roughnesses R1 and R2 is larger than 5 nm and both roughnesses R1 and R2 are smaller than 100 nm. A roughness R3 at the contact surface 16 of the second plate 4 facing the movable element 3, and a roughness R4 at the contact surface 17 of the movable element 3 facing the second plate 4, both roughnesses R1 and R2 being smaller than at least one of the roughnesses R3 and R4, reduce sticking of the movable element 3 to the second plate 4. At least one of the roughnesses R3 and R4 is larger than 100 nm and both roughnesses R3 and R4 are smaller than 1000 nm. If the roughness R2 is larger than the roughness R1 and the roughness R4 is larger than the roughness R3, both the light guide plate 2 and the second plate 4 may have smooth contact surfaces facing the movable element 3, which is easier to realize in a production process. In particular, the preferred range of roughnesses is present at the contact surfaces of the movable element 3 facing the light guide plate 2 and the second plate 4: the roughness R2 is in the range between 5 and 100 nm and the roughness R4 is in the range between 100 and 1000 nm.

In Fig. 4, the matrix layer 18 is a glassy amorphous layer. The matrix layer 18 may also be a crystalline polymeric layer. Examples of these layers are a parylene, polymethylmethacrylate, fluoropolymer and polyimide layer. Also a cross-linked polymer layer with mechanical properties equivalent to those of a glassy amorphous or crystalline polymeric layer can be used. The thickness of the matrix layer 18 is preferably between 0.5 and 3 micrometer, and most preferably between 1 to 2 micrometer. The scattering particles 19 also act as inorganic protrusions 24 and are made of for instance TiO2 BN, ZrO2, SiO2, Si3N4 and Al2O3 The average size of the scattering particles 19 is preferably between 200 and 400 nm. The concentration of scattering particles 19 is in the range from 1 to 50 percent. Preferably the concentration is in between 1 and 25 percent. Preferably the difference in refractive index between the matrix layer 18 and the scattering particles 19 is larger than 0.1. For smaller differences the scattering efficiency of the scattering particles 19 is very low. Good scattering results are obtained when the refractive index difference is larger than 0.5. Preferred materials for the scattering particles 19 are TiO2, BN, and Al203, since these materials are practically colorless. The refractive index of the matrix material 18 is preferably close to the refractive index of the material of the light guide plate 2, i.e. the difference is less than approximately 0.2. In this case, the reflection at the contact surface between the light guide plate 2 and the movable element 3 is small. A conducting indium tin oxide layer 20 is present to apply a voltage to the movable element.

In Fig. 5, the display device 1 comprises the display panel 21 and selection means 22, arranged to apply voltages to the electrodes 5, 6 and 25 dependent on the image information to be displayed.

## Claims

1. A display panel (21) comprising a light guide plate (2), a second plate (4) facing the light guide plate (2), a movable element (3) between the light guide plate (2) and the second plate (4), for locally coupling light out of the light guide plate (2), the light guide plate (2) having a contact surface (14) facing the movable element (3) for contacting the movable element (3), the second plate (4) having a contact surface (16) facing the movable element (3) for contacting the movable element (3), the movable element (3) having a first contact surface (15) facing the light guide plate (2) for contacting the light guide plate (2) and a second contact surface (17) facing the second plate (4) for contacting the second plate (4), means for reducing sticking of the movable element to the plates (2, 4) comprising a roughness R1 at the contact surface (14) of the light guide plate (2) and a roughness R2 at the first contact surface (15) of the movable element, at least one of the roughnesses R1 and R2 being larger than 5 nm and both the roughnesses R1 and R2 being smaller than 100 nm, and electrodes (5, 6, 25) to locally bring the contact surfaces (15, 17) of the movable element into contact with respectively the contact surface (14) of the light guide plate (2) and the contact surface (16) of the second plate (4), **characterized in that** the means for reducing sticking further comprise a roughness R3 at the contact surface (16) of the second plate (4) and a roughness R4 at the second contact surface (17) of the movable element (3), and both roughnesses R1 and R2 are smaller than at least one of the roughnesses R3 and R4, and at least one of the roughnesses R3 and R4 is larger than 100 nm and both the roughnesses R3 and R4 are smaller than 1000 nm.

2. A display panel (21) as claimed in claim 1, **characterized in that** the roughness R2 is larger than the roughness R1 and the roughness R4 is larger than the roughness R3.

3. A display panel (21) as claimed in claim 2, **characterized in that** the roughness R2 is in the range between 5 and 100 nm and the roughness R4 is in the range between 100 and 1000 nm.

4. A display panel (21) as claimed in claim 2, **characterized in that** at least one of the roughnesses R2 and R4 is brought about by inorganic protrusions (24) from the movable element (3).

5. A display panel (21) as claimed in claim 4, **characterized in that** the movable element (3), having a volume, comprises a matrix layer (18) selected from the group consisting of glassy amorphous and crystalline polymeric layers, with 1 to 25 percent of the volume being occupied by TiO2 particles (19) having a diameter between 200 and 400 nm, and an indium tin oxide layer (20).

6. A display device (1) comprising the display panel (21) of claim 1.

## Patentansprüche

1. Anzeigetafel (21) mit einer Lichtleiterplatte (2), wobei eine zweite Platte (4) der Lichtleiterplatte (2) zugewandt ist, einem beweglichen Element (3) zwischen der Lichtleiterplatte (2) und der zweiten Platte (4), um das Licht aus der Lichtleiterplatte (2) lokal zu koppeln, wobei die Lichtleiterplatte (2) eine, dem beweglichen Element (3) zugewandte Kontaktfläche (14) aufweist, um das bewegliche Element (3) zu kontaktieren, wobei die zweite Platte (4) eine, dem beweglichen Element (3) zugewandte Kontaktfläche (16) auf weist, um das bewegliche Element (3) zu kontaktieren, wobei das bewegliche Element (3) eine, der Lichtleiterplatte (2) zugewandte, erste Kontaktfläche (15), um die Lichtleiterplatte (2) zu kontaktieren, und eine, der zweiten Platte (4) zugewandte, zweite Kontaktfläche (17) aufweist, um die zweite Platte (4) zu kontaktieren, Mitteln zur Reduzierung des Anhaftens des beweglichen Elements an den Platten (2, 4) mit einer Rauheit R1 auf der Kontaktfläche (14) der Lichtleiterplatte (2) und einer Rauheit R2 auf der ersten Kontaktfläche (15) des beweglichen Elements, wobei mindestens eine der Rauheiten R1 und R2 größer als 5 nm ist und beide Rauheiten R1 und R2 kleiner als 100 nm sind, sowie Elektroden (5, 6, 25), um die Kontaktflächen (15, 17) des beweglichen Elements lokal in Kontakt mit jeweils der Kontaktfläche (14) der Lichtleiterplatte (2) und der Kontaktfläche (16) der zweiten Platte (4) in Kontakt zu bringen, **dadurch gekennzeichnet, dass** die Mittel zur Reduzierung der Haftung weiterhin eine Rauheit R3 auf der Kontaktfläche (16) der zweiten Platte (4) und eine Rauheit R4 auf der zweiten Kontaktfläche (17) des beweglichen Elements (3) aufweisen, und dass beide Rauheiten R1 und R2 geringer als mindestens eine der Rauheiten R3 und R4 sind und mindestens eine der Rauheiten R3 und R4 größer als 100 nm ist und beide Rauheiten R3 und R4 geringer als 1000 nm sind.

2. Anzeigetafel (21) nach Anspruch 1, **dadurch gekennzeichnet, dass** die Rauheit R2 größer als die Rauheit R1 und die Rauheit R4 größer als die Rauheit R3 ist.

3. Anzeigetafel (21) nach Anspruch 2, **dadurch gekennzeichnet, dass** die Rauheit R2 im Bereich zwischen 5 und 100 nm und die Rauheit R4 im Bereich zwischen 100 und 1000 nm liegt.

4. Anzeigetafel (21) nach Anspruch 2, **dadurch gekennzeichnet, dass** mindestens eine der Rauheiten R2 und R4 durch anorganische Vorsprünge (24) von dem beweglichen Element (3) erzeugt werden.

5. Anzeigetafel (21) nach Anspruch 4, **dadurch gekennzeichnet, dass** das bewegliche Element (3), welches ein Volumen aufweist, eine Matrixschicht (18), die aus der Gruppe ausgewählt wird, der glasartige, amorphe und kristalline Polymerschichten angehören, wobei 1 bis 25 Prozent des Volumens von Ti02-Teilchen (19) mit einem Durchmesser zwischen 200 und 400 nm eingenommen werden, sowie eine Indiumzinnoxidschicht (20) aufweist.

6. Anzeigeeinrichtung (1), welche die Anzeigetafel (21) von Anspruch 1 auf weist.

## Revendications

1. Ecran d'affichage (21) comprenant une plaque de guidage de lumière (2), une seconde plaque (4) qui se situe vis-à-vis de la plaque de guidage de lumière (2), un élément mobile (3) entre la plaque de guidage de lumière (2) et la seconde plaque (4), pour sortir localement par couplage la lumière de la plaque de guidage de lumière (2), la plaque de guidage de lumière (2) ayant une surface de contact (14) faisant face à l'élément mobile (3) pour entrer en contact avec l'élément mobile (3), la seconde plaque (4) ayant une surface de contact (16) faisant face à l'élément mobile (3) pour entrer en contact avec l'élément mobile (3), l'élément mobile (3) ayant une première surface de contact (15) faisant face à la plaque de guidage de lumière (2) pour entrer en contact avec la plaque de guidage de lumière (2) et une seconde surface de contact (17) faisant face à la seconde plaque (4) pour entrer en contact avec la seconde plaque (4), des moyens pour réduire l'adhérence de l'élément mobile aux plaques (2, 4) comprenant une rugosité R1 à l'endroit de la surface de contact (14) de la plaque de guidage de lumière (2) et une rugosité R2 à l'endroit de la première surface de contact (15) de l'élément mobile, au moins une des rugosités R1 et R2 étant supérieure à 5 nm et les rugosités R1 aussi bien que R2 étant inférieures à 100 nm, et des électrodes (5, 6, 25) pour mettre les surfaces de contact (15, 17) de l'élément mobile localement en contact avec respectivement la surface de contact (14) de la plaque de guidage de lumière (2) et la surface de contact (16) de la seconde plaque (4), **caractérisé en ce que** les moyens pour réduire l'adhérence comprennent encore une rugosité R3 à l'endroit de la surface de contact (16) de la seconde plaque (4) et une rugosité R4 à l'endroit de la seconde surface de contact (17) de l'élément mobile (3) et les deux rugosités R1 et R2 sont inférieures à au moins une des rugosités R3 et R4 et au moins une des rugosités R3 et R4 est supérieure à 100 nm et les rugosités R3 aussi bien que R4 sont inférieures à 1000 nm.

2. Ecran d'affichage (21) selon la revendication 1, **caractérisé en ce que** la rugosité R2 est supérieure à la rugosité R1 et la rugosité R4 est supérieure à la rugosité R3.

3. Dispositif d'affichage (21) selon la revendication 2, **caractérisé en ce que** la rugosité R2 se situe dans la gamme comprise entre 5 nm et 100 nm et **en ce que** la rugosité R4 se situe dans la gamme comprise entre 100 nm et 1000 nm.

4. Ecran d'affichage (21) selon la revendication 2, **caractérisé en ce qu'**au moins une des rugosités R2 et R4 est provoquée par des saillies inorganiques (24) en provenance de l'élément mobile 3.

5. Ecran d'affichage (21) selon la revendication 4, **caractérisé en ce que** l'élément mobile 3 ayant un volume comprend une couche matricielle (18) qui est sélectionnée parmi le groupe étant constitué de couches polymères amorphes vitreuses et cristallines, 1 à 25 pour cent du volume étant occupé par des particules (19) constituées de TiO₂ ayant un diamètre dans la gamme comprise entre 200 nm et 400 nm, et une couche d'oxyde d'indium dopé à l'étain (20).

6. Dispositif d'affichage (1) comprenant l'écran d'affichage (21) selon la revendication 1.
